Europäisches Patentamt

European Patent Office

Office européen des brevets

(11) Publication number: **0 319 802**
A2

# EUROPEAN PATENT APPLICATION

(21) Application number: 88119710.7

(51) Int. Cl.⁴: **H04N 1/40**

(22) Date of filing: 25.11.88

(30) Priority: 09.12.87 JP 309673/87
26.08.88 JP 213331/88

(43) Date of publication of application:
14.06.89 Bulletin 89/24

(84) Designated Contracting States:
DE FR GB

(71) Applicant: Dainippon Screen Mfg. Co., Ltd.
1-1, Tenjinkitamachi Teranouchi-Agaru
4-chome Horikawa-Dori
Kamikyo-ku Kyoto 602(JP)

(72) Inventor: Shimano, Masanori Dainippon
Screen Mfg. Co., Ltd.
Tokyo, Branch Office 5-38-7, Higashi
Ikebukuro
Toshima-ku, Tokyo(JP)

(74) Representative: Goddar, Heinz J., Dr. et al
FORRESTER & BOEHMERT
Widenmayerstrasse 4/I
D-8000 München 22(DE)

(54) Obtaining a monochromatic image from a colour original.

(57) A magenta signal (M) is selected from four colour component signals (Y, M, C, K) through a switching circuit (10), to be subjected to the respective gradation corrections in gradation correction circuits (11Y, 11M, 11C, and 11K) in parallel. Images for yellow, magenta, cyan and black blocks are recorded on a photosensitive film (5) on the basis of the signals obtained through the gradation correction circuits. Coloured inks are overprinted on a common paper using the blocks, thereby to obtain a monochromatic image.

FIG. 1

## Obtaining a monochromatic image from a colour original

THIS INVENTION relates to a method and apparatus for obtaining a monochromatic image from a colour original using a colour image recorder operable to read the image of the colour original by scanning the original.

As is well known in the art, a colour process scanner is employed for obtaining colour printing blocks such as yellow, magenta, cyan and black blocks. The colour process scanner photoelectrically reads a colour original by scanning the original and records the image on a recording medium for each colour component thereof. In a drum type scanner, for example, the recording medium, such as a photosensitive film is wrapped around a recording drum, and the colour component images can be recorded thereon in parallel, the colour component images being arrayed along the main scanning direction, i.e. around the circumference of the recording drum. In order to prevent a printed image from exhibiting a moire pattern, the colour component images are recorded as halftone dot images having different screen angles. For example, the respective screen angles for the yellow, magenta, cyan and black blocks may be set at 0°, 15°, 75° and 45° respectively. A technique for obtaining such an improvement has been established.

After the colour component blocks are obtained, coloured inks corresponding to the colour components are applied to the respective blocks, and the colour component images on the blocks are printed on to a common paper through transfer of the inks, thereby to obtain a printed colour image.

On the other hand, it is often required to print a colour image in a monochromatic colour. In a fundamental method of such monochromatic printing, one of the colour component blocks, e.g., the magenta block, is selected, and the monochromatic image is otained by applying black ink onto the one block to transfer the "black" image thereon to a printing paper. Although the method has the advantage of simplicity, the printed monochromatic image thus obtained lacks depth since the optical density range therein is restricted due to the intrinsic density range of the black ink.

In order to compensate for the lack of depth, another technique has been developed, wherein one of the colour component signals obtained by reading a colour original is arbitrarily selected. The selected signal, e.g., a colour component signal for a magenta block, is commonly employed for serially obtaining recorded images at different screen angles. Then, a plurality of blocks are produced according to the respective recorded images, and different coloured inks, such as yellow, magenta and cyan, are printed onto a common paper using the respective blocks to obtain a printed image. Although the printed image is expressed by the combination of the different coloured inks, a substantially monochromatic image is obtained, since the coloured inks are so overprinted on the paper that the subtractive colour mixture of the inks expresses a monochromatic colour, e.g., achromatic colour. The technique is very useful for obtaining a monochromatic image having great depth, and therefore is often employed in printing.

However, the conventional technique for achieving the overprinting has the disadvantage that the process is complicated and time-consuming and numerous operations are required, since the process step for reading the original colour image has to be repeated in order to obtain the different colour blocks, and a desired gradation character and a screen angle must be provided for every colour component singal in series while changing the screen angle for each colour component signal. This disadvantage is serious especially where the image data processing is carried out with a colour process scanner, because the scanner is occupied by the image processing for a long time, and other operations cannot be performed in the scanner until the image processing is completed.

Furthermore, the optical density of the recorded image is often shifted from that desired for each colour component, the shift depending on the selection of the colour component signal to be employed, and therefore the printed image is often somewhat unnatural.

The present invention aims to provide an improved method of obtaining a monochromatic image from a colour original by overprinting a plurality of colour inks.

According to the present invention, the method includes deriving single colour component data expressing one colour component included in the original image, applying a plurality of predetermined correction rules to the single colour component data in parallel to obtain a set of corrected colour component data, producing a plurality of printing blocks according to the corrected colour component data and overprinting a plurality of coloured inks on a common substrate using the respective blocks, thereby to obtain a monochromatic image substantially reproducing the original image in a monochromatic colour on the common substrate.

Preferably, the correction rules are so determined that data indicating an arbitrary level can be corrected by the correction rules in parallel to give a set of corrected data substantially expressing a monochromatic image. In a preferred embodiment of the present invention, the monochromatic colour is an achromatic colour.

The correction rules may include respective gradation correction rules for different colours.

In another aspect of the invention, the step of applying a plurality of predetermined correction rules in parallel to the single colour component data is replaced by the steps of deriving a set of colour component data, mixing the colour component data together to obtain mixed colour data and then applying the correction rules to the mixed colour data rather than the single colour component data. The mixed colour data may express a weighted average of a set of colour component data.

The present invention also provides apparatus for reading an original image to obtain a plurality of recorded images employed for producing a plurality of colour printing blocks used to print a reproduction image on a printing substrate, characterised in that the apparatus comprises means for reading each colour component of the original image to generate colour component signals (Y, M, C and K) selecting means for selecting one colour component signal (eg M) from the colour component signals, a plurality of correction means (11Y, 11M, 11C and 11K) in which predetermined colour correction rules are stored, transmission means for transmitting the one colour component signal to each of the correction means in parallel, to obtain a plurality of corrected colour component signals ($Y_b$, $M_b$, $C_b$ and $K_b$) from the correction means, and means for recording images expressed by the respective corrected colour component signals on a recording medium to obtain the recorded images.

The selecting means may be replaced by mixing means for mixing the colour component signals with each other to obtain a mixed colour signal, the mixed colour signal being supplied to the correction means in parallel in place of the one colour component signal.

The present invention enables a monochromatic image to be obtained form a colour original at a high speed, since the corrected colour component signals are obtained in parallel. When mixed colour data is employed, the monochromatic image is especially faithful to the image tone of the original.

In order that the invention may be more readily understood, embodiments thereof will now be described, by way of example, with reference ot the accompanying drawings, in which:

Figure 1 is a block diagram showing a drum type colour process scanner according to a preferred embodiment of the present invention;

Figure 2 is a graph showing gradation correction curves employed in the preferred embodiment;

Figure 3 is a circuit diagram showing an example of a colour monochrome switching circuit employed in the preferred embodiment; and

Figure 4 is a circuit diagram showing another example of the colour monochrome switching circuit.

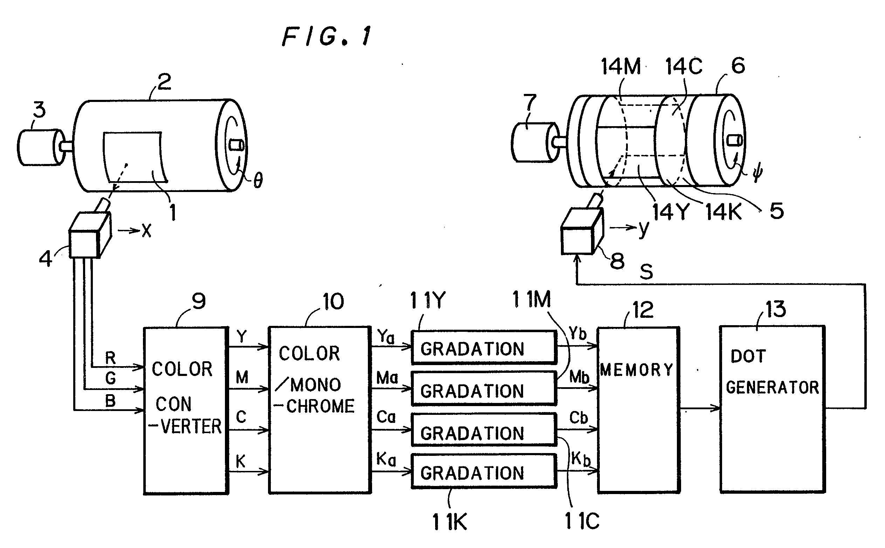

Figure 1 shows a drum type colour process scanner according to a preferred embodiment of the present invention. A transparent originals drum 2 on which a colour original 1 is mounted is rotated in the direction $\theta$ by a motor 3. A light source (not shown) disposed inside the originals drum 2 emits light to a scanning area of the colour original 1. The light, after passing through the original 1, carries colour image information relating to the scanning area of the original 1, and is picked up by a pick-up head 4 which is moved in the longitudinal direction $x$ of the original drum 2 by means of a driving mechanism (not shown).

Through the rotation of the drum 2 and the translational movement of the pick-up head 4, each pixel of the desired area on the original 1 is scanned by the pick-up head 4, whereby the colour image of the original 1 is sequentially read along scanning lines on the original 1. The direction opposite to the direction $\theta$ is the main scanning direction, while the direction $x$ is the subscanning direction.

The pick-up head 4 comprises a set of photoelectric converters for converting the colour components of the light to electrical primary colour signals R, G and B representing the red, green and blue components of the original colour image, respectively.

The set of colour signals R, G and B is delivered to a colour converter 9, to be converted into a set of colour component signals Y, M, C and K representing yellow, magenta, cyan and black negative components of the original colour image, respectively. A colour/monochrome switching circuit 10 connected to the colour converter 9 has a structure which will be described later, and is operable to convert the set of colour component signals Y, M, C and K to a derived set of colour component signals $Y_a$, $M_a$, $C_a$ and $K_a$. The relationship between the input signals Y, M, C and K, and the output signals $Y_a$, $M_a$, $C_a$ and $K_a$ will be also described later.

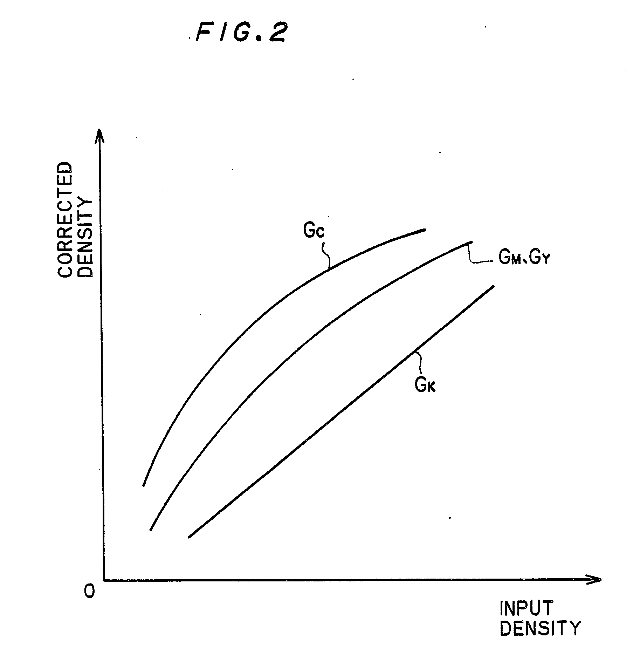

The colour component signals $Y_a$, $M_a$, $C_a$ and $K_a$ are supplied to respective gradation correction circuits 11Y, 11M, 11C and 11K, in which gradation curves suitable for correcting the respective gradations for the yellow, magenta, cyan and black components are stored. The gradation curves are so determined that, when an arbitrary one of the colour component signals $Y_a$, $M_a$, $C_a$ and $K_a$ is selected to be corrected in the circuits 11Y, 11M, 11C and 11K in parallel, a set of the corrected signals $Y_b$, $M_b$, $C_b$ and $M_b$ substantially expresses a monochromatic image. In the preferred embodiment, the monochromatic image is an achromatic colour image. Such a set of gradation curves can be obtained through experiments, and an example thereof is shown in Figure 2, the gradation curves $G_Y$, $G_M$, $G_C$ and $G_K$ being stored in the respective gradation correction circuits 11Y, 11M, 11C and 11K. In the preferred embodiment, the gradation curves $G_Y$, $G_M$, $G_C$ and $G_K$ are so determined that a set of signals obtained by correcting data having an arbitrary level using gradation curves $G_Y$, $G_M$, $G_C$ and $G_K$ in parallel represents an achromatic image.

The colour component signals $Y_a$, $M_a$, $C_a$ and $K_a$ are subjected to gradation correction in the respective circuits 11Y, 11M, 11C and 11K, the respective gradation corrections in the gradation correction circuits 11Y, 11M, 11C and 11K being carried out in parallel. Then, the corrected signals are supplied to a memory 12 as corrected colour component signals $Y_b$, $M_b$, $C_b$ and $K_b$. The colour component data expressed by the signals $Y_b$, $M_b$, $C_b$ and $K_b$ is temporarily stored in the memory 12. The respective colour component data for yellow, magenta, cyan and black blocks is transferred to a halftone dot generator 13, to be converted into halftone dot image data corresponding to screen angles $0°$, $15°$ and $75°$ and $45°$, respectively. the respective halftone dot image data for yellow, magenta, cyan and black blocks is arranged in series for each scanning line, and delivered to an exposure head 8 in the form of a time sharing image signal S.

The exposure head 8 is moved along the longitudinal direction y of a recording drum 6 by means of a driving mecahnism (not shown) synchronised with that of the pick-up head 4. The recording drum 6 is rotated in the direction φ by a motor 7. A photosensitive film 5 is mounted on the recording drum 6, onto which the recording head 8 projects a laser beam modulated in response to the image signal S. Since the image signal S expresses the halftone dot image data for respective colour components in a time sharing manner for each scanning line, the areas 14Y, 14M, 14C and 14K of the film 5 along the circumferential direction of the recording drum 6 are exposed by the laser beam in series for each scanning line but substantially in parallel as a whole. As a result, respective latent halftone dot images for yellow, magenta, cyan and black blocks are recorded on the areas 14Y, 14M, 14C and 14K in the different screen angles, respectively.

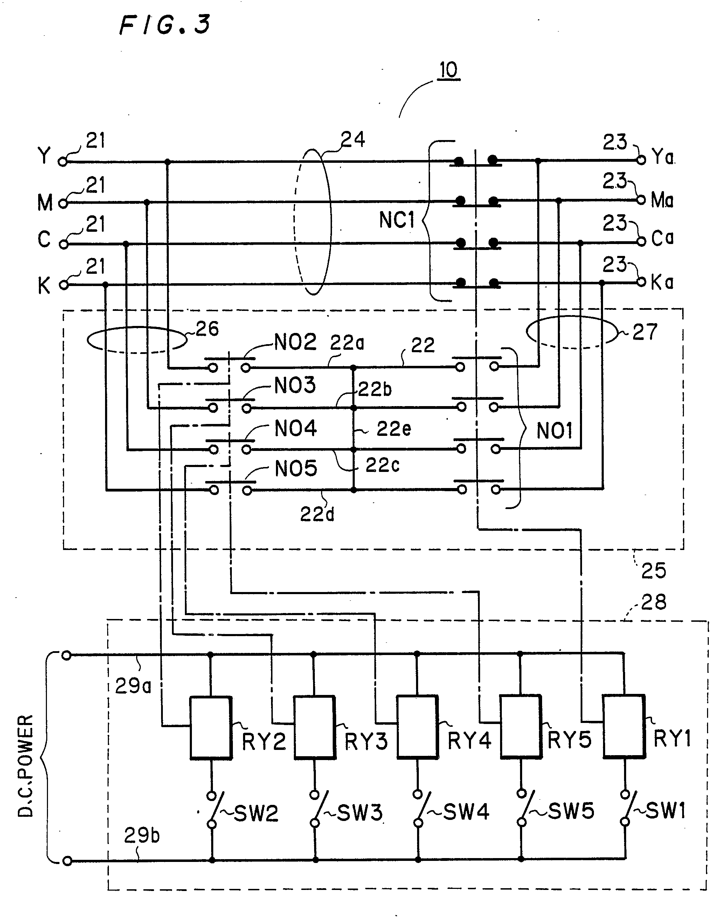

The internal structure of the colour/monochrome switching circuit 10 is shown in Figure 3. The colour component signals Y, M, C and K are input from the respective input terminals 21. Main signal lines 24 are provided between the input terminals 21 and output terminals 23, a set of normally closed contacts NC1 being inserted therein.

The switching circuit 10 has a bypass circuit 25 through which the normally closed contacts NC1 are bypassed. The bypass circuit 25 has entrance lines 26 branching from the main signal path 24 at nodes between the input terminals 21 and normally closed contacts NC1, and exit lines 27 connected to nodes between the normally closed contacts NC1 and the output terminals 23. The entrance lines 26 are connected to normally open contacts NO2-NO5, respectively, and the normally open contacts NO2-NO5 are coupled to a set of normally open contacts NO1 through a connection circuit 22. The connection circuit 22 has four lines 22a-22d connecting the normally open contacts NO2-NO5 with respective ones of the normally open contacts NO1, and a line 22e interconnecting the lines 22a-22d. The normally open contacts NO1 are connected to the exit lines 27, respectively, whereby the signal path between the connection circuit 22 and the exit lines 27 can be opened or closed through the contacts NO1.

The colour monochrome switching circuit 10 further comprises a control circuit 28 for controlling the respective switching operations of the switches NC1 and NO1-NO5. The control circuit 28 is provided with a pair of power lines 29a and 29b, through which DC power is supplied to the control circuit 28. Relays RY1-RY5 are provided between the source lines 29a and 29b in parallel, and manual switches SW1-SW5 are connected to the relays RY1-RY5 in series, respectively. The relay RY1 is coupled to the contacts NC1 and NO1, and the other relays RY2-RY5 are coupled to the respective contacts NO2-NO5. When the manual switch SW1 is closed, the contacts NC1 and NO1 are automatically opened and closed, respectively, through the electromagnetic excitation of the relay RY1. On the other hand, when any one of the manual switches SW2-SW5 is closed, the corresponding one of the normally open contacts NO2-NO5 is closed.

When it is desired to employ the colour process scanner for colour image recording, all of the switches SW1-SW5 are opened by manual operation, so that the normally closed contacts NC1 are closed and the normally open contacts NO2-NO5 are opened. Accordingly, the main signal lines 24 are electrically connected to the output terminals 23, and the bypass circuit 25 is disabled. The colour component signals Y, M, C and K are transmitted to the output terminals 23 through the main signal lines 24 and contacts NC1, to be output from the circuit 10 as the signals $Y_a$, $M_a$, $C_a$ and $K_a$, respectively, i.e.,

$$Y_a = Y, M_a = M, C_a = C \text{ and } K_a = K \qquad (1)$$

Therefore, the colour component images for yellow, magenta, cyan and black blocks are recorded on the respective areas 14Y, 14M, 14C and 14K, similarly to the normal operation of a conventional colour process scanner. The photosensitive film 5 is then developed, and the four blocks are produced by means of the developed film. Yellow, magenta, cyan and black inks are applied to the respective blocks, and the images on the blocks are overprinted on a paper. The printed image thus obtained is a colour image reproducing the colour original.

On the other hand, when it is desired to obtain a monochromatic reproduced image, the manual switch SW1 and an arbitrary one of the manual switches SW2-SW5 are closed. In the following description, it is supposed that the manual switch SW3 is closed and the switches SW2, SW4 and SW5 are opened.

In response to the manual operation, the normally closed contacts NC1 are opened, and the normally open contacts NO1 and NO3 are closed, through the electromagnetic excitation of the relays RY1 and RY3. The other normally open contacts NO2, NO4 and NO5 remain open. Accordingly, the main signal path through the contacts NC1 is opened, and the bypass circuit 25 is enabled, so that only the magenta signal M is transmitted to the connection circuit 22. Since the interconnection line 22e is provided in the connection circuit 22, the magenta signal M is delivered to each of the output terminals 23 through the contacts NO1 and the exit lines 27. As a result, each of the output signals $Y_a$, $M_a$, $C_a$ and $K_a$ represent the magenta signal M, i.e.,

$$Y_a = M_a = C_a = K_a = M \qquad (2)$$

The colour component signals $Y_a$, $M_a$, $C_a$ and $K_a$ are supplied to the respective gradation correction circuits 11Y, 11M, 11C and 11K in parallel. The signals $Y_a$, $M_a$, $C_a$ and $K_a$ are subjected to the gradation corrections according to the respective gradation curves $G_Y$, $G_M$, $G_C$ and $G_K$ in parallel. The corrected signals $Y_b$, $M_b$, $C_b$ and $K_b$ are supplied to the memory 12 and the respective colour component data expressed by the corrected signals is temporarily stored in the memory 12. The colour component data is then read from the memory 12 and transmitted to the halftone dot generator 13. The halftone dot generator 13 converts the colour component data into halftone dot data, where the halftone dot data corresponding to the signals $Y_b$, $M_b$, $C_b$ and $K_b$ expresses halftone dot images at the screen angles 0°, 15°, 75° and 45°, respectively. The halftone dot data is arranged to generate the image signal S, whereby colour component images are recorded on the respective areas 14Y, 14M, 14C and 14K for each scanning line.

Although the signals $Y_a$, $M_a$, $C_a$ and $K_a$ are all the same due to the condition (2), the halftone dot data corresponding to the signals $Y_a$, $M_a$, $C_a$ and $K_a$ differs, since the gradation curves $G_Y$, $G_M$, $G_C$, $G_K$ are individually prepared and the respective screen angles for the yellow, magenta, cyan and black blocks differ from each other.

The exposed photosensitive film 5 is then developed, and blocks for yellow, magenta, cyan and black are produced by means of the photosensitive film 5. Yellow, magenta, cyan and black inks are applied to the respective blocks, and the respective images or inks on the four blocks are overprinted on a common paper.

Since the gradation curves $G_Y$, $G_M$, $G_C$ and $G_K$ are set such that the combination of the colour component signals $Y_b$, $M_b$, $C_b$ and $K_b$ represent an achromatic image, the image obtained through the overprinting is substantially an achromatic image. Furthermore, the monochromatic image has great depth due to the over-printing of the colour inks.

Although an achromatic image is obtained in the preferred embodiment, other monochromatic images can be obtained through adjustment of the gradation curves. For example, when the gradation curves $G_M$ and $G_Y$ are relatively enhanced, a sepia image is obtained on the paper. Further, the colour component signal Y, C or K may be employed as the signal to be commonly supplied to the gradation correction circuit 11Y, 11M, 11C and 11K, in place of the magenta signal M, by closing the corresponding switch SW2, SW4 or SW5 in place of the switch SW3.

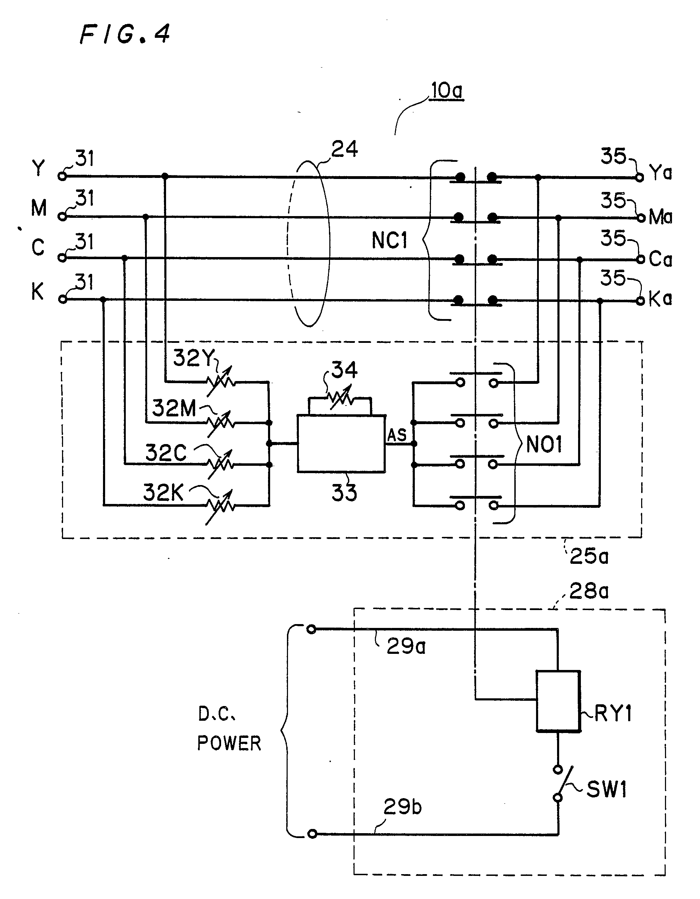

Figure 4 is a circuit diagram showing another example of the colour monochrome switching circuit 10. As will be understood by comparing Figure 4 with Figure 3, variable resistors 32Y, 32M, 32C and 32K are provided in place of the contacts NO2-NO5, and respective one sides of the variable resistors 32Y, 32M, 32C and 32K being connected to each other. An analogue adder 33 including an operational amplifier is connected between the set of variable resistors 32Y, 32M, 32C and 32K and normally open contacts NO1. The analogue adder 33 is provided with a variable resistor 34 for varying the gain.

Bypass circuit 25a and normally closed contacts NC1 are controlled by a control circuit 28a having a relay RY1 and a manual switch SW1 connected in series, the relay RY1 being operable to electromagnetically drive the contacts NC1 and NO1.

When it is desired to obtain a colour reproduced image, the manual switch SW1 is opened, so that the normally closed contacts NC1 are closed and the normally open contacts NO1 are opened. Accordingly, the bypass circuit 25a is disabled, and the colour component signals Y, M, C and K input to input termainls 31 are transmitted to output terminals 35 through main signal lines 24 and contacts NC1. As a result, the condition (1) already explained with reference to Figure 3 holds and a colour reproduced image is obtained similarly to the normal operation of a conventional colour process scanner.

On the other hand, when it is desired to obtain a monochromatic reproduced image, the manual switch SW1 is closed, whereby the normally closed contacts NC1 are opened and the normally open contacts NO1 are opened. The variable resistors 32Y, 32M, 32C and 32K are previously adjusted to respective desired resistance values. Preferably, the respective resistance values of the variable resistors 32Y, 32M, 32C and 32K are not equal to each other, so that a weighted average of the colour component signals Y, M, C and K is obtained by means of the analogue adder 33. The weighted average is expressed by the weighted average signal AS, which is delivered to each of the output terminals 35 as the output signals $Y_a$, $M_a$, $C_a$ and $K_a$. Therefore, when the values of the weights for the input signals Y, M, C and K are expressed by y, m, c, and k, respectively, the output signals $Y_a$, $\overline{M_a}$, $\overline{C_a}$ and $\overline{K_a}$ are provided as:

$$Y_a = M_a = C_a = K_a = AS \qquad (3)$$
$$AS = g\,(yY + mM + cC + kK)/(y + m + c + k) \qquad (4)$$

where the coefficient $\underline{g}$ has a value depending upon the gain in the adder 33.

The following operation of the present colour process scanner is similar to that employing the switching circuit 10 shown in Figure 3, except that the weighted average signal AS is input to the gradation correction circuits 11Y, 11M, 11C and 11K, in place of one of the colour component signals Y, M, C and K. Yellow, magenta, cyan and black inks are applied to the respective blocks thus produced, and the respective images or inks on the blocks are overprinted on a common paper, so that a monochromatic image such as an achromatic image is obtained as the reproduced image.

The advantage of the process employing the switching circuit 10a shown in Figure 4 is as follows: Supposing that the original colour image has a relatively large amount of the magenta component, the magenta signal M has a relatively low value since the magenta signal is obtained from the light passing through a green filter (not shown) provided in the pick-up head 4. Therefore, if the magenta signal M is employed as the common input signal to the gradation correction circuits 11Y, 11M, 11C and 11K, the resulting printed monochromatic image is inclined to a light or pale image. Alternatively, when the cyan colour signal C obtained through a red filter is employed as the common input signal, the printed monochromatic image is inclined to a dark image.

On the other hand, when the weighted average signal AS generated in the switching circuit 10a of Figure 4 is employed as the common input signal, the inclinations in the reproduced image described above are cancelled out by each other, so that a monochromatic image faithful to the density and tone of the original image is obtained on the printed paper. The common input signal for the gradation correction circuits 11Y, 11M, 11C and 11K may be another mixture signal obtained by mixing the colour component signals using a mixture rule other than the weighted average.

It is envisaged that the present invention can accept the following modifications, for example.

(a) The colour monochrome switching circuit 10 may be constructed with the combination of a logic circuit and an electronic switching element such as a switching transistor.

(b) A layout system for editing a plurality of images according to a desired layout may be provided between the memory 12 and the halftone dot generator 13.

(c) The present invention may be applied to a process of recording an image having a continuous tone such as a gravure printing, and that of directly producing gravure blocks by etching block materials while employing a layout system. When it is desired to obtain a continuous tone image, a conversion to a halftone dot image is carried out after the preliminary image recording is completed.

(d) The respective images for yellow, magenta, cyan and black blocks may be serially recorded on respective photosensitive films. One colour component signal or a weighted average signal is commonly employed for serially recording the colour component images.

(e) The present invention may be applied to a case where the original image is a monochromatic image.

The features disclosed in the foregoing description, in the following claims and/or in the accompanying drawings may, both separately and in any combination thereof, be material for realising the invention in diverse forms thereof.

## Claims

1. A method of obtaining a monochromatic reproduction image from an original image through overprinting of a plurality of coloured inks, characerised in that the method includes deriving single colour component data expressing one colour component included in the original image, applying a plurality of predetermined correction rules to the single colour component data in parallel to obtain a set of corrected colour component data, producing a plurality of printing blocks according to the corrected colour component data and overprinting a plurality of coloured inks on a common substrate using the respective blocks, thereby to obtain a monochromatic image substantially reproducing the original image in a monochromatic colour on the common substrate.

2. A method in accordance with claim 1, including reading the original image to obtain a set of colour component data, and extracting the single colour component data from the set of colour component data.

3. A method in accordance with claim 1 or 2, wherein the correction rules are associated with respective gradation correction rules.

4. A method in accordance with any preceding claim, wherein the blocks are produced as halftone dot image blocks, and respective screen angles of the blocks differ from each other.

5. A method of obtaining a monochromatic image from an original image through overprinting of a plurality of coloured inks, characterised in that the method includes deriving a set of colour component data expressing a plurality of colour components included in the original image, mixing the colour component data together to obtain mixed colour data, applying a plurality of predetermined correction rules in parallel to the mixed colour data to obtain a set of corrected colour component data, producing a plurality of printing blocks according to the corrected colour component data, and overprinting a plurality of coloured inks on a common substrate using the respective blocks, thereby to obtain a monochromatic image substantially reproducing the original image in a monochromatic colour on the common substrate.

6. A method in accordance with claim 5, including obtaining a weighted average of the colour component data, the weighted average being expressed by the mixed colour data.

7. A method in accordance with any preceding claim, wherein the correction rules are determined such that data representing an arbitrary level is corrected through the correction rules in parallel to give a set of corrected data substantially expressing a monochromatic image.

8. A method in accordance with any preceding claim, wherein the monochromatic image is achromatic.

9. An apparatus for reading an original image to obtain a plurality of recorded images employed for producing a plurality of colour printing blocks used to print a reproduction image on a printing substrate, characterised in that the apparatus comprises means (2, 3, 4 and 9) for reading each colour component of the original image (1) to generate colour component signals, (Y, M, C and K) selecting means (10, 28) for selecting one colour component signal (eg M) from the colour component signals, a plurality of correction means (11Y, 11M, 11C and 11K) in which predetermined colour signal correction rules are stored, transmission means (10, 25) for transmitting the one colour component signal to each of the correction means in parallel, to obtain a plurality of corrected colour component signals ($Y_b$, $M_b$, $C_b$ and $K_b$) from the correction means, and means (6, 7, 8, 12 and 13) for recording images expressed by the respective corrected colour component signals on a recording medium (5) to obtain the recorded images.

10. An apparatus in accordance with claim 9, wherein the selecting means (10) comprises means (28) for selecting the one colour component signal from the colour component signals in response to a first manual operation.

11. An apparatus for reading an original image to obtain a plurality of recorded images employed for producing a plurality of colour printing blocks used to print a reproduction image on a printing substrate, characterised in that the apparatus comprises means (2, 3, 4 and 9) for reading each colour component of the original image (1) to generate colour component signals (Y, M, C and K), mixing means (10a) for mixing the colour component signals together to obtain a mixed colour signal (AS), a plurality of correction means (11Y, 11M, 11C and 11K) in which predetermined colour signal correction rules are stored, transmission means (10a, 25a) for transmitting the mixed colour signal to the correction means in parallel, to obtain a plurality of corrected colour component signals ($y_b$, $M_b$, $C_b$ and $K_b$) from the correction means, and means (6, 7, 8, 12 and 13) for recording images expressed by the respective corrected colour component signals on a recording medium (5), to obtain the recorded images.

12. An apparatus in accordance with claim 11, wherein the mixing means (10a) comprises averaging means (32 to 34) for obtaining a weighted average of the colour component signals, the weighted average being expressed by the mixed colour signal.

13. An apparatus in accordance with claim 11 or 12, wherein the mixing means (10a) comprises means (32) for manually varying weight values for the weighted average.

14. An apparatus in accordance with any one of claims 9 to 13, wherein the apparatus comprises means (28, 28a) for manually disabling the transmission means (25, 25a) and means (24) for transmitting the colour component signals to the correction means with the transmission means disabled so that the corrected colour component signals are obtained from the respective colour component signals when the transmission means is disabled.

EP 0 319 802 A2

## FIG. 1

# F I G . 2

F I G. 3

## F I G . 4